Europäisches Patentamt

European Patent Office

Office européen des brevets

(19)

(11) Veröffentlichungsnummer: **0 073 415**
A2

# (12) EUROPÄISCHE PATENTANMELDUNG

(21) Anmeldenummer: **82107525.6**

(22) Anmeldetag: **18.08.82**

(51) Int. Cl.³: **B 01 F 5/02,** B 01 F 3/00,
B 01 F 3/04, B 01 F 13/02

(30) Priorität: **22.08.81 DE 3133314**

(43) Veröffentlichungstag der Anmeldung: **09.03.83**
**Patentblatt 83/10**

(84) Benannte Vertragsstaaten: **AT BE CH DE FR GB IT LI NL**

(71) Anmelder: **HOECHST AKTIENGESELLSCHAFT,
Postfach 80 03 20, D-6230 Frankfurt/Main 80 (DE)**

(72) Erfinder: **Fischer, Edgar, Dr., Assmannshäuser Weg 8,
D-6000 Franfurt am Main 71 (DE)**
Erfinder: **Sittig, Wolfgang, Sulzbacher Weg 2,
D-6238 Hofheim am Taunus (DE)**

(54) **Vorrichtung zum Dispergieren einer zweiten Phase in einer ersten Phase.**

(57) Bei dieser Vorrichtung zum Dispergieren einer zweiten Phase in einer ersten Phase sind auf dem Boden (2) eines Behälters (1) Einleiteinrichtungen (3) angeordnet. Die Austrittsöffnungen (4) dieser Einleiteinrichtungen (3) weisen einen unterschiedlichen Abstand zum Boden (2) auf; und zwar nimmt ihr Abstand zum Boden in Richtung zum Zentrum des Bodens ab. Der Abstand der äußeren, d.h. in Randnähe angeordneten Austrittsöffnungen (4) vom Boden (2) beträgt zwischen 15 bis 40% des Bodendurchmessers.

HOECHST AKTIENGESELLSCHAFT    HOE 81/F 214    D.Ph.HS/sch

**Vorrichtung** zum Dispergieren einer zweiten Phase in einer ersten Phase

Es ist bekannt, eine mit einer ersten Phase mischbare oder nicht mischbare zweite Phase, zum Beispiel Gas in Flüssigkeit zu dispergieren. Man leitet die zweite Phase in die erste Phase ein und verteilt die zu dispergierende Phase mit geeigneten Vorrichtungen, wie zum Beispiel Fritten, Düsen, Düsenkränze, Flüssigkeitsstrahlen, Begasungsrührern und dergleichen über deren senkrecht projizierten Querschnitt. Ohne zusätzliche Energiedissipation erreicht man mit diesen Verteilvorrichtungen keine befriedigende Verteilung der zu dispergierenden Phase, auch nicht deren Zerteilung in kleine Blasen bzw. Tröpfchen mit sehr großen Oberflächen, bezogen auf ihr Volumen. Es ist auch bekannt, die in einem Mammutpumpenreaktor erzeugte kinetische Energie zum Dispergieren von Blasen zu benutzen.

Der vorliegenden Erfindung liegt demnach die Aufgabe zugrunde, eine Vorrichtung zu schaffen, mit deren Hilfe eine zweite Phase in einer ersten Phase dispergiert werden kann, ohne daß hierfür zusätzliche Energie erforderlich wird.

Die Aufgabe wird durch eine Vorrichtung gelöst, die dadurch gekennzeichnet ist, daß auf dem Boden eines Behälters Einleitvorrichtungen angeordnet sind, deren Austrittsöffnungen einen unterschiedlichen Abstand zum Boden aufweisen, wobei der Abstand zum Zentrum des Bodens hin abnimmt.

Der Abstand der äußeren Austrittsöffnungen vom Boden kann 15 bis 40 %, vorzugsweise 20 bis 30 % des Bodendurchmessers betragen, und die Summe der freien Querschnitte der Austrittsöffnungen 0,10 bis 20 %, vorzugsweise 0,2 bis 4 % der Bodenfläche. Der Querschnitt des Behälters kann hinsichtlich seiner Kontur beliebig gewählt werden, zum Beispiel quadratisch, rechteckig und dergleichen. Bevorzugt wird jedoch ein Behälter mit kreisförmigem Querschnitt. Als Einleiteinrichtungen eignen sich Rohre, insbesondere Düsenrohre. Der Durchmesser der Rohre kann bis zu 120 mm betragen. Es kann von Vorteil sein, die Einleiteinrichtungen so auf dem Boden des Behälters anzuordnen, daß zwischen Behälterwand und Einleiteinrichtungen ein von Einleiteinrichtungen freier Ringraum entsteht, dessen Querschnitt 20 bis 80 % des gesamten Bodenquerschnittes beträgt.

Die durch die Erfindung erreichten Vorteile sind im wesentlichen darin zu sehen, daß durch das Anordnen einer Vielzahl von individuellen Einleiteinrichtungen auf dem Boden des Dispergierbehälters ein ungehinderter Zutritt von schlaufenartig zurückströmender erster Phase (Flüssigkeit, Feststoff) zu jeder Austrittsöffnung der Einleiteinrichtungen ermöglicht wird. Durch Abnahme des Abstandes zum Boden, wobei der Abstand der Austrittsöffnungen zum Boden außen am größten und in seinem Zentrum am kleinsten sein soll, wird die gleichmäßige Verteilung der ersten Phase über den gesamten Boden, d.h. der gleichmäßige Zutritt der ersten Phase zu den einzelnen Austrittsöffnungen noch wesentlich verbessert. Die erste Phase gelangt unter die Einleiteinrichtung und strömt parallel zu den sich an den Austrittsöffnungen bildenden Blasen oder Tröpfchen der zweiten Phase und umhüllt diese. Die Blasendurchmesser bzw. die Tröpfchendurchmesser und deren Größenverteilung können allein durch entsprechende Ausgestaltung der Austrittsöffnungen vorgegeben werden. Ferner war überraschend, daß sich infolge der besonderen Anordnung der Einleiteinrichtung auch ohne Umlenkvorrichtung eine schlaufenförmige Bewegung der ersten Phase einstellt.

Die Vorrichtung eignet sich zum Dispergieren von Gasen in Flüssigkeit, von mischbaren und nicht mischbaren Flüssigkeiten in eine zweite Flüssigkeit. Die Vorrichtung läßt sich ferner vorteilhaft anwenden für Gaswäschen, insbesondere für die Desinfektion von Gasen, für die Desinfektion von Flüssigkeiten, für die Übertragung von Materie, für die Eintragung von Energie, z.B. für die Gastrocknung, die Pulvertrocknung, zur Sättigung von Flüssigkeit mit Gasen, beispielsweise zur Sauerstoffversorgung von Mikroorganismen in Suspensionen, für thermische Umsetzungen durch Gaseinleitung, durch Flüssigkeitseinleitung, für Extraktionen im System flüssig/flüssig oder flüssig/fest.

Im folgenden wird die Erfindung anhand einer lediglich einen Ausführungsweg darstellenden Zeichnung näher erläutert.

Im Behälter 1, dessen Boden 2 doppelwandig ausgebildet sein kann, sind auf dem Boden 2 Einleiteinrichtungen 3 angeordnet. Die Austrittsöffnungen 4 der Einleiteinrichtungen 3 weisen einen unterschiedlichen Abstand zum Boden 2 auf. Der Abstand nimmt zum Zentrum des Bodens hin ab und ist nach außen am größten. Die Einleiteinrichtungen 3 sind so auf dem Boden 2 angeordnet, daß zwischen Behälterwand 5 und Einleiteinrichtungen 3 ein von Einleiteinreichungen freier Ringraum 8 für die zu den Einleiteinrichtungen zurückströmende Phase 9 bleibt. Die zweite Phase (z.B. Gasblasen) kann den Einleiteinrichtungen 3 durch Stutzen 6 über doppelten Boden 7 zugeführt werden. Stutzen 10, 11, 12 dienen der Abfuhr bzw. Zufuhr der Phasen.

## Beispiel 1

In einem Begasungsreaktor von 600 mm ∅, 2,40 m Höhe und 1,80 m Flüssigkeitshöhe ergaben sich mit der herkömmlichen Begasungsform einer Düse Gasgehalte von 19 %. Bei Einsatz des vorgeschlagenen Systems erhöhte sich der Gasgehalt auf 24,5 %. Der Durchmesser der begasten Fläche betrug 450 mm, die Anzahl der Gaseinleitstellen war 56, der Durchmesser der Gasaustrittsstellen betrug 6 mm. Der Gasdurchsatz lag bei 100 m³/h. Dabei betrug die Belüftungsgeschwindigkeit, bezogen auf den freien Querschnitt 0,1 m/s. Der spez. Stoffübergangswert stieg von 124 $h^{-1}$ auf 186 $h^{-1}$.

## Beispiel 2

Ein begaster Wirbelschichttrockner von 2 m ∅ und 1,00 m Schichthöhe zeigte Betriebsstörungen mit dem Auftreten großer Blasen und folgendem Ungleichmaß der Feststoffverteilung. Im Randbereich führte dies zum Aufbau von festen Schüttungen und der Ausbildung von Temperaturnestern. Schließlich bildeten sich Klumpen von 150 mm ∅, sodaß das Verfahren abgestellt werden mußte. Zur Beseitigung dieser aufgetretenen Schwierigkeiten wurden am Boden auf einer Fläche von 1,6 m Durchmesser 183 Gaseinleitstellen mit einem Gesamtquerschnitt der Austrittsöffnungen von 1 % der gesamten Bodenfläche und mit 200 mmm Höhe am Rand und 20 mm Höhe in der Mitte der Fläche angebracht. Dadurch wurde ein ruhiger Betrieb erreicht. Temperaturspitzen oder Feststoffschüttungen konnten nicht mehr beobachtet werden. Trockenleistung reproduzierbar.

## Beispiel 3

Eine flüssig/flüssig-Extraktionskolonne von 800 mm ∅ und 10 m Höhe zur Rückgewinnung von Ameisensäure aus wäßriger Kochsalzspinnlösung mit Hilfe von Tributylphosphat führte zu immer wiederkehrenden Betriebsausfällen, da sehr feine Tropfen schlecht koaleszierten und zu einer Mulmschichtbildung am Koaleszer führten. Durch Anwendung der erfindungsgemäßen Vorrichtung mit 600 mm Ø der Tropfeneinleitungsfläche und 129 Tropfeneinleitungsröhrchen von 250 mm Höhe
am Rande und 20 mm Höhe in der Mitte war die Herstellung
eines gleichmäßigen Tropfenspektrums von 6 mm Ø möglich,
was zu einer um 30 % gesteigerten Extraktionsleistung und
der Unterbindung der Ausfälle führte.

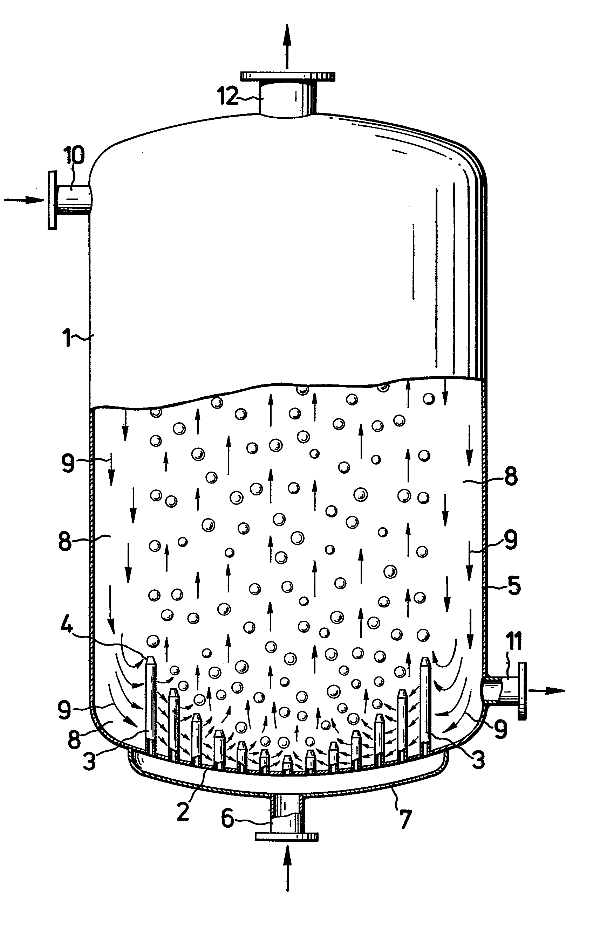

Patentansprüche:

1. Vorrichtung zum Dispergieren einer zweiten Phase in einer ersten Phase, dadurch gekennzeichnet, daß auf dem Boden (2) eines Behälters (1) Einleiteinrichtungen (3) angeordnet sind, deren Austrittsöffnungen (4) einen unterschiedlichen Abstand zum Boden (2) aufweisen, wobei der Abstand zum Zentrum des Bodens (2) hin abnimmt.

2. Vorrichtung nach Anspruch 1, dadurch gekennzeichnet, daß der Abstand der äußeren Austrittsöffnungen (4) vom Boden (2) 15 bis 40 %, vorzugsweise 20 bis 30 % des Bodendurchmessers beträgt.

3. Vorrichtung nach Anspruch 1 oder 2, dadurch gekennzeichnet, daß die Summe der freien Querschnitte der Austrittsöffnungen (4) 0,10 bis 20 %, vorzugsweise 0,2 bis 4 % der Bodenfläche beträgt.

4. Vorrichtung nach Anspruch 1, 2 oder 3, dadurch gekennzeichnet, daß die Austrittsöffnungen (4) Querschnitte bis 100 cm² aufweisen.

5. Vorrichtung nach den Ansprüchen 1 bis 4, dadurch gekennzeichnet, daß die Einleiteinrichtungen (3) so auf dem Boden (2) des Behälters (1) angeordnet sind, daß zwischen Behälterwand (5) und Einleiteinrichtungen (3) ein von Einleiteinrichtungen (3) freier Ringraum (8) bleibt, dessen Querschnitt 20 bis 80 % des gesamten Bodenquerschnittes beträgt.